# EUROPEAN PATENT APPLICATION

(11) **EP 4 450 154 A1**
(43) Date of publication of application: **23.10.2024**
(21) Application number: 22907080.0
(22) Date of filing: 08.11.2022
(51) Int. Cl.: B01J 19/18, B01F 23/41, B01F 27/96

(54) **METHOD FOR CIRCULATING TREATMENT LIQUID, AND LIQUID DISPERSAL DEVICE AND TREATMENT LIQUID CIRCULATION APPARATUS USED IN SAID METHOD**

(30) Priority: 17.12.2021 JP 2021205610
(71) Applicant: Kansai Chemical Engineering Co., Ltd., Amagasaki-shi, Hyogo 660-0053 (JP); Bio-energy Corporation, Amagasaki-shi, Hyogo 660-0053 (JP)
(72) Inventor: NODA, Hideo, Amagasaki-shi, Hyogo 660-0053 (JP); HAMA, Shinji, Amagasaki-shi, Hyogo 660-0053 (JP); MUKAIDA, Tadahiro, Amagasaki-shi, Hyogo 660-0053 (JP)
(74) Representative: Eyre, David Edward
(86) International application number: PCT/JP2022/041525
(87) International publication number: WO 2023/112549

(57) **Abstract**

The present invention is directed to a method for circulating a treatment liquid, and the method includes a step of rotating a liquid dispersal device to draw the treatment liquid into the liquid dispersal device and eject the treatment liquid from the liquid dispersal device. Here, the liquid dispersal device includes a rotary shaft disposed in a vertical direction, and at least one liquid flow member attached to the rotary shaft. The liquid flow member includes an ejection portion that is located at a higher position and protrudes outside the treatment liquid, a suction portion that is located at a lower position and is immersed in the treatment liquid, and a tubular channel that extends between the ejection portion and the suction portion. The tubular channel is bent such that the ejection portion is oriented toward a side opposite to the rotary shaft. Also, the method of the present invention is performed in a state in which the tubular channel of the liquid flow member of the liquid dispersal device is filled with the treatment liquid.

## Description

### Technical Field

The present invention relates to a method for circulating a treatment liquid, and a liquid dispersal device and a treatment liquid circulation apparatus used in the circulation method.

### Background Art

In recent years, oils and fats have been gaining attention as raw materials to be converted into fuels and chemicals. In particular, active attempts are being made to synthesize long-chain fatty acid esters from animal oils and fats and/or vegetable oils and fats through chemical reactions and utilize the synthesized long-chain fatty acid esters as biodiesel fuel that is interchangeable with light oil.

On the other hand, for reaction systems with two or more liquid phases in which phase transfer catalysts or slurry catalysts are used, technologies for synthesizing various compounds through reactions such as asymmetric synthesis reactions have been gaining attention. Many of these reactions are accelerated through vigorous agitation of the reaction system.

Two-liquid-phase reactions may be employed, for example, in production of biodiesel fuel. An example thereof is an enzyme-catalyzed transesterification reaction in which an enzyme such as lipase is used as a catalyst. A liquid enzyme or an enzyme (immobilized enzyme) immobilized on a carrier such as an ion-exchange resin is used as the enzyme for such an enzyme-catalyzed transesterification reaction. Because a culture solution is concentrated and refined and is then used as the liquid enzyme, the liquid enzyme is less expensive than the immobilized enzyme. The enzyme remains in an aqueous solution of glycerin, which is produced as a byproduct in the aforementioned transesterification reaction, and thus this solution can be used for a reaction in a following batch. This makes it possible to reuse the liquid enzyme repeatedly and reduce the cost for the production of biodiesel fuel (Non-Patent Document 1).

In a transesterification reaction in which a liquid enzyme is used, a two-phase system that includes an oil layer and a water layer is used, and an emulsion is formed through, for example, high-speed agitation of reactants. Here, a considerable amount of energy load needs to be applied to the agitator during the high-speed agitation of the reactants. Meanwhile, to increase the industrial productivity, there has been a desire to reduce the amount of energy required to circulate the treatment liquid included in the reaction system through agitation or the like. However, this leads to a contradiction where the ability to form emulsions using the reactants decreases and the transesterification reaction cannot be effectively performed.

Alternatively, an alkaline catalyst can also be used in place of the above enzyme. However, in this case as well, a reaction system with two liquid phases is adopted, and circulation of the treatment liquid caused by vigorous agitation is required for the reaction.

### Related Art Document

### Non-Patent Document

Non-Patent Document 1: M. Nordblad et al., Biotechnology and Bioengineering, 2014, Vol.11, No. 12, pp.2446-2453

### Summary of Invention

### Problem to be Solved by the Invention

The present invention is to solve the above-mentioned problems, and it is an object thereof to provide a method for circulating a treatment liquid that can reduce energy required for mixing or agitation of various treatment liquids, and a liquid dispersal device and a treatment liquid circulation apparatus used in the circulation method.

### Means for Solving the Problem

The present invention provides a method for circulating a treatment liquid, comprising:
rotating a liquid dispersal device to draw the treatment liquid into the liquid dispersal device and eject the treatment liquid from the liquid dispersal device,
wherein the liquid dispersal device includes:
   a rotary shaft disposed in a vertical direction; and
   at least one liquid flow member attached to the rotary shaft,
   the liquid flow member including: an ejection portion that is located at a higher position and protrudes outside the treatment liquid; a suction portion that is located at a lower position and is immersed in the treatment liquid; and a tubular channel that extends between the ejection portion and the suction portion,
   the tubular channel being bent and the ejection portion being oriented toward a side opposite to the rotary shaft, and
   an angle θ₂ between a direction in which the ejection portion is oriented and a horizontal direction being -90° to 20° with respect to the horizontal direction, and
the tubular channel is filled with the treatment liquid.

In one embodiment, the liquid dispersal member is inclined, and the suction portion is closer to an axis of the rotary shaft than the ejection portion is.

In one embodiment, the liquid dispersal device includes at least two liquid flow members.

In one embodiment, the angle θ₂ is 0° to 20° with respect to the horizontal direction.

In one embodiment, a state in which the tubular channel of the liquid flow member of the liquid dispersal device is filled with the treatment liquid is kept due to rotation of the rotary shaft of the liquid dispersal device.

In one embodiment, the treatment liquid is a reaction liquid constituted by an oil phase and a water phase.

In one embodiment, a state in which the tubular channel is filled with the treatment liquid is kept due to hysteresis of the treatment liquid obtained by a decrease in rotation of the rotary shaft of the liquid dispersal device.

The present invention also provides a liquid dispersal device comprising:
a rotary shaft disposed in a vertical direction; and
a liquid flow member attached to the rotary shaft,
wherein the liquid flow member includes:
   at least one first liquid flow member; and
   at least one second liquid flow member,
the first liquid flow member and the second liquid flow member independently include an ejection portion located at a higher position, a suction portion located at a lower position, and a tubular channel extending between the ejection portion and the suction portion,
   the tubular channel being bent and the ejection portion being oriented toward a side opposite to the rotary shaft, and
   an angle θ₂ between a direction in which the ejection portion is oriented and a horizontal direction being 0° to 20° with respect to the horizontal direction, and
the suction portion of the first liquid flow member is located above the suction portion of the second flow member.

In one embodiment, the tubular channel has a circular cross section, an elliptical cross section, or a polygonal cross section.

The present invention also provides a treatment liquid circulation apparatus comprising:
a treatment chamber for containing a treatment liquid; and
the liquid dispersal device provided in the treatment chamber.

In one embodiment, the treatment liquid is a reaction liquid constituted by an oil phase and a water phase.

### Effects of the Invention

With the present invention, it is possible to efficiently circulate the treatment liquid while reducing power applied to the rotary shaft. This makes it possible to facilitate, with little power, the circulation in the vertical direction of the treatment liquid contained in the treatment chamber in addition to agitation thereof due to the rotation in the horizontal direction. When, for example, a reaction liquid that includes two phases constituted by an oil phase and a water phase is contained as the treatment liquid in the treatment chamber, it is possible to facilitate emulsification of the reaction liquid and/or extraction of a byproduct (e.g., glycerin) with water without the use of extra power. At this time, it is possible to progress the reaction by ejecting a portion of the reaction liquid located near the bottom of the treatment chamber from a point above the liquid surface and mixing this portion of the reaction liquid with a portion of the reaction liquid located at another location (near the liquid surface).

### Brief Description of Drawings

FIG. 1 is a schematic view showing an example of a treatment liquid circulation apparatus in which a liquid dispersal device that can be used in a method of the present invention is incorporated.
FIG. 2 is a cross-sectional view taken along a longitudinal direction that schematically shows a liquid flow member of the liquid dispersal device shown in FIG. 1.
FIG. 3 is a schematic view showing another example of the treatment liquid circulation apparatus in which the liquid dispersal device that can be used in the method of the present invention is incorporated.
FIG. 4 is a schematic view showing yet another example of the treatment liquid circulation apparatus in which the liquid dispersal device that can be used in the method of the present invention is incorporated.
FIG. 5 is a schematic view showing yet another example of the treatment liquid circulation apparatus in which the liquid dispersal device that can be used in the method of the present invention is incorporated.

### Description of Embodiments

The following describes the present invention with reference to the accompanying drawings. Note that constituent elements denoted by the same reference numeral in the drawings referred to below are the same as those shown in the other drawings.

In a method for circulating a treatment liquid (which may be referred to simply as a "circulation method" hereinafter) according to the present invention, a liquid dispersal device is rotated and thus the treatment liquid is drawn into and ejected from the liquid dispersal device.

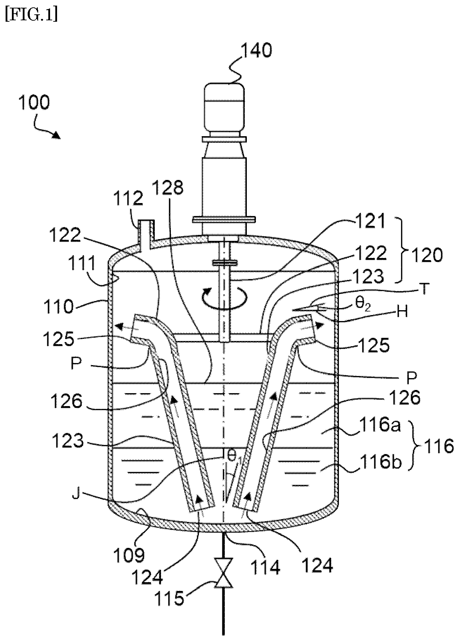

FIG. 1 is a schematic view showing an example of a treatment liquid circulation apparatus in which a liquid dispersal device that can be used in the circulation method of the present invention is incorporated.

A liquid dispersal device 120 shown in FIG. 1 includes a rotary shaft 121 disposed in the vertical direction, and at least one liquid flow member 123 attached to the rotary shaft 121 preferably via an attachment tool 122 extending in the horizontal direction. The liquid flow member 123 includes an ejection portion 125 that is located at a higher position and protrudes outside a treatment liquid 116, a suction portion 124 that is located at a lower position and is immersed in the treatment liquid 116, and a tubular channel 126 that extends between the ejection portion 125 and the suction portion 124.

As shown in FIG. 1, in the liquid dispersal device 120, the suction portion 124 of the liquid flow member 123 is located below a liquid surface 128 of the treatment liquid 116, and the ejection portion 125 of the liquid flow member 123 is located above the liquid surface 128 of the treatment liquid 116. As a result, the liquid dispersal device 120 can, for example, draw the reaction liquid 116 contained in a treatment chamber 110 as shown in FIG. 1 through the suction portion 124 of the liquid flow member 123 and allow the reaction liquid 116 to flow upward from the lower portion of the treatment chamber 110 through the tubular channel 126, due to the rotation of the rotary shaft 121 and the centrifugal force caused by this rotation that is applied to the liquid flow member 123. Then, the drawn treatment liquid is ejected from the ejection portion 125 of the liquid flow member 123 at a position above the liquid surface 128.

It is preferable to perform the circulation method of the present invention in a state in which the tubular channel 126 of the liquid flow member 123 of the liquid dispersal device 120 is filled with the treatment liquid 116. Here, the wording "the tubular channel is filled with the treatment liquid" refers to a state in which the treatment liquid flows inside the tubular channel with no space.

Here, according to the general siphon principle, once a liquid is discharged from the exit (corresponding to the ejection portion according to the present invention) provided at a lower position in a state in which a tube is filled with the liquid, a new liquid is sucked through an entrance (corresponding to the suction portion according to the present invention) provided at a higher position, and the liquid keeps moving from the entrance to the exit until all the liquid present at the entrance moves and no liquid remains, or bubbles are generated in the tube and thus cavitation begins.

Meanwhile, in the present invention, in the case where the treatment liquid is moved from the suction portion 124 to the ejection portion 125 through the tubular channel 126 in the liquid flow member 123, once the tubular channel 126 has been filled with the treatment liquid, the liquid dispersal member 123 enables continuous movement of the treatment liquid through the tubular channel 126 that starts with drawing of the treatment liquid through the suction portion 124 and ends with ejection of the treatment liquid from the ejection portion 125, as a tube used in the siphon principle, as long as the rotation of the rotary shaft 121 continues. That is to say, in the circulation method of the present invention, the state in which the tubular channel 126 of the liquid flow member 123 of the liquid dispersal device 120 is filled with the treatment liquid 116 is kept due to the rotation of the rotary shaft 121 of the liquid dispersal device 120. In this specification, this continuous movement of the treatment liquid is referred to as "siphon-like" movement of the treatment liquid.

In the present invention, once this siphon-like movement of the treatment liquid starts, the volume of the treatment liquid that moves per unit time (e.g., mL/second) will increase compared with the volume (e.g., mL/second) before the start of the continuous movement when the rotary shaft 121 is rotated at the same speed, thus making it possible to efficiently stir a large amount of treatment liquid.

The liquid dispersal device 120 shown in FIG. 1 enables the occurrence of the siphon-like movement of the treatment liquid through the suction portion 124, the tubular channel 126, and the ejection portion 125 of the liquid flow member 123. As a result, once the siphon-like movement of the treatment liquid starts, the suction of the treatment liquid through the suction portion 124 and the ejection of the treatment liquid from the ejection portion 125 can be substantially continuously performed in the liquid flow member 123 even if the rotary shaft 121 is rotated at a relatively reduced speed (i.e., even if the power required for rotation is reduced).

Note that, if the rotational frequency is lower than a certain value, it is difficult to fill the tubular passage 120 with the treatment liquid, and thus the siphon-like movement of the treatment liquid is not achieved, which leads to failure of continuous ejection of the treatment liquid from the ejection portion 125.

In the present invention, it is preferable that the locations of the suction portion 124 and the ejection portion 125 with respect to the liquid surface 128 are kept in both the static stage (i.e., in the state in which the rotary shaft 121 is not rotated and the liquid surface of the treatment liquid 116 spreads in a substantially horizontal direction) and the stage where the rotary shaft 121 is rotated at the desired rotational speed (i.e., in the state in which the treatment liquid 116 is being agitated as described below due to the rotation of the rotary shaft 121). As a result, the treatment liquid 116 in the treatment chamber 110 can be easily drawn through the suction portion 124 of the liquid flow member by rotating the rotary shaft 121 and the liquid flow member 123, and then the treatment liquid 116 can move to the ejection portion 125 through the tubular channel 126 in the liquid flow member 123 due to centrifugal force and be ejected toward, for example, an inner wall 111 of the treatment chamber 110 or the liquid surface 128 of the treatment liquid 116, from the ejection portion 125.

In the liquid dispersal device 120 of the present invention, the tubular channel 126 is bent such that the ejection portion 125 is oriented to a side opposite to the rotary shaft 121. For example, in the liquid dispersal device 120 shown in FIG. 1, at least a portion of the tubular channel 126 is bent (as indicated by a bent portion P in FIG. 1), and the ejection portion 125 is oriented toward the inner wall 111 of the treatment chamber 110. As a result, the treatment liquid drawn through the suction portion 124 of the liquid dispersal device 120 is normally ejected from the ejection portion 125 toward the inner wall 111 of the treatment chamber 110.

Note that, in the liquid dispersal device 120 shown in FIG. 1, one bent portion P is provided in one tubular channel 126, but the present invention is not particularly limited to this form as long as the ejection portion 125 is oriented toward the inner wall 111 of the treatment chamber 110. A plurality of bent portions may be provided in one tubular channel 126 as long as the ejection portion 125 is oriented toward the inner wall 111 of the treatment chamber 110. In the present invention, it is preferable that the bent portion P is curved in an arc shape in order to avoid or reduce the occurrence of undesired erosion in the bent portion.

Note that, in the description of the embodiment shown in FIG. 1, the treatment liquid 116 is in the form of a two-phase system reaction liquid constituted by an oil phase 116a and a water phase 116b and the liquid dispersal device 120 with two liquid flow members is used, but the present invention is not limited to only this configuration. The liquid dispersal device 120 includes at least one liquid flow member or, for example, one, two, three, four, five, or six liquid flow members. When the liquid dispersal device 120 includes a plurality of liquid dispersal members, it is preferable that the liquid dispersal members are disposed at substantially equal angular intervals in the rotational direction about the rotary shaft in order to achieve smooth rotation.

The rotary shaft 121 is a shaft with predetermined rigidity, and has, for example, a cylindrical shape or a columnar shape. The rotary shaft 121 typically extends in the vertical direction inside the treatment chamber 110. The thickness of the rotary shaft 121 is not necessarily limited, but is, for example, 8 mm to 200 mm. The length of the rotary shaft 121 varies according to the size of the treatment chamber 110 used or the like, and an appropriate length may be selected by a person skilled in the art.

An end of the rotary shaft 121 is connected to a motor 140 or other rotating means at a position above the treatment chamber 110. The other end of the rotary shaft 121 is not connected to the bottom 109 of the treatment chamber 110 and is, for example, disposed away from the bottom 109 of the treatment chamber 110 at a fixed distance (and is preferably separated from the liquid surface 128 of the treatment liquid 116). This reduces the likelihood of the rotary shaft 121 coming into contact with the treatment liquid 116. Alternatively, the other end of the rotary shaft may be housed in a bearing provided at the bottom 109 of the treatment chamber.

In the liquid dispersal device 120 shown in FIG. 1, the liquid flow member 123 is inclined such that the suction portion 124 of the liquid flow member 123 is closer to an axis J of the rotary shaft 121 than the ejection portion 125 is. That is to say, in the liquid dispersal device 120, the liquid flow member 123 is inclined such that the shortest distance between the suction portion 124 of the liquid flow member 123 and the axis J of the rotary shaft 121 is shorter than the shortest distance between the ejection portion 125 and the axis J of the rotary shaft 121.

Alternatively, in the liquid dispersal device 120 shown in FIG. 1, the liquid flow member 123 is attached so as to be inclined at a predetermined angle (also referred to as an attachment inclination angle) θ₁ relative to the axial direction of the rotary shaft 121. The attachment inclination angle θ₁ can be set to any desired angle by a person skilled in the art, but is, for example, 5° to 45° and preferably 10° to 25°.

In the present invention, the liquid flow member 123 is processed so as to have, for example, a tubular shape (e.g., a shape of a cylinder, an oval tube, or a polygonal tube) as a whole, and has a cross section having a geometric shape such as a circle; an ellipse; or any polygon including a triangle, a rectangle, and the like. For the reason that the above-mentioned siphon-like movement of the treatment liquid easily occurs, it is preferable that the cross section of the liquid flow member 123 has a shape with no corners, such as a circle or an ellipse.

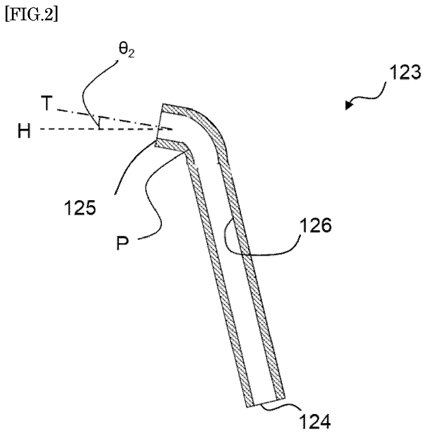

The size of the liquid flow member 123 is not particularly limited. FIG. 2 is a cross-sectional view taken along the longitudinal direction that schematically shows an example of a second liquid flow member of the liquid dispersal device shown in FIG. 1. For example, when the liquid dispersal member 123 is formed using a cylindrical member, the inner diameter thereof is, for example, 2 mm to 200 mm. The length from the suction portion 124 to the bent portion P is not particularly limited, and an appropriate length can be selected by a person skilled in the art. Note that, in FIG. 2, the suction portion 124, the tubular passage 126, and the ejection portion 125 appear to have substantially the same inner diameter, but the present invention is not limited to only this form. For example, the inner diameter of the liquid flow member 123 may decrease from the suction portion 124 toward the ejection portion 125 via the bent portion P in a gradual or stepwise manner.

Furthermore, in the liquid flow member 123 shown in FIG. 2, an angle θ₂ between a direction T in which the ejection portion 125 is oriented and a horizontal direction His -90° to 20°, or alternatively 0° to 20° in another example, with respect to the horizontal direction. If the angle θ₂ is smaller than -90°, centrifugal force acts in a direction in which the treatment liquid may flow backward in the liquid flow member, and thus the treatment liquid cannot be effectively ejected from the ejection portion in some cases. If the angle θ₂ exceeds 20°, a more rotational frequency (more power) is required to eject the treatment liquid from the ejection portion. Meanwhile, even if the tubular passage 120 is filled with the treatment liquid, hysteresis caused by a subsequent decrease in rotational frequency (power) does not occur, and the amount of the treatment liquid ejected from the ejection portion may decrease due to the decrease in rotation speed (power).

In the present invention, a treatment liquid circulation apparatus 100 as shown in FIG. 1 in which the liquid dispersal device 120 is incorporated can be used as, for example, a reaction apparatus in which a reaction liquid (treatment liquid) containing various reactants is contained, or a treatment liquid mixing apparatus or treatment liquid agitation apparatus to be used when contents need to be physically mixed or agitated.

Next, a treatment liquid circulation apparatus that can be used in the circulation method of the present invention will be described with reference to FIG. 1 again.

A treatment liquid circulation apparatus 100 of the present invention includes the treatment chamber 110 and the above-described liquid dispersal device 120.

The treatment chamber 110 is a sealable chamber in which the treatment liquid 116 can be contained and agitated, and has a bottom 109 that is a flat bottom, a round bottom, a conical bottom, or a downward sloping bottom, for example.

The size (capacity) of the treatment chamber 110 is not necessarily limited, because it is set as appropriate according to the application of the treatment liquid circulation apparatus 100, the amount of treatment liquid to be processed, and the like, but the size is, for example, from 0.1 liters to 1,000,000 liters.

In one embodiment, the treatment chamber 110 also includes a treatment liquid inlet 112 and a product outlet 114. The treatment liquid inlet 112 is an inlet through which the treatment liquid 116 is newly supplied into the treatment chamber 110. The treatment liquid inlet 112 is provided, for example, on the top (e.g., on a top lid) of the treatment chamber 110. Alternatively, the treatment liquid inlet 112 may be provided in a side surface of the treatment chamber 110. The number of treatment liquid inlets 112 provided on the treatment chamber 110 is not limited to one. For example, a plurality of anti-treatment inlets may be provided on the treatment chamber 110.

The product outlet 114 is an outlet through which a product obtained in the treatment chamber 110 is to be taken out of the treatment chamber 110. Reaction residues, effluent, and the like in addition to the product are capable of being discharged through the product outlet 114, and the discharge can be regulated by, for example, opening and closing a valve 115 provided downstream of the product outlet 114. The product outlet 114 is in communication with, for example, the center of the bottom 109 in the treatment chamber 110.

The top of the treatment chamber 110 may be provided with, for example, an openable structure such as a lid or a maintenance hole. The top of the treatment chamber 110 may be further provided with a pressure adjustment port (not shown) for adjusting the pressure in the treatment chamber 110. Furthermore, the pressure adjustment port may be connected to, for example, a pressure reducing pump (not shown).

The treatment liquid 116 contained in the treatment chamber 110 is a liquid such as an aqueous solution or a slurry. In a case where the treatment liquid circulation apparatus 100 is used in, for example, the production of a fatty acid ester through a transesterification reaction, which will be described later, the treatment liquid 116 is constituted by, for example, a two-phase system reaction liquid composed of the oil phase 116a and the water phase 116b, and both of the oil phase 116a and the water phase 116b contain reactants such as starting materials and media such as solvents.

In the treatment liquid circulation apparatus 100 shown in FIG. 1, the treatment liquid 116 is drawn by the liquid flow member 123 in the liquid dispersal device 120 through the suction port 124 as a result of the rotary shaft 121 being rotated. The drawn treatment liquid moves to the ejection port 125 through the tubular passage 126 due to centrifugal force caused by the rotation of the rotary shaft 121, and is ejected from the ejection port 125 into the treatment chamber 110, or more specifically, a space above the liquid surface 128 of the treatment liquid 116 in the treatment chamber 110. In addition, when the tubular channel 126 is completely filled with the reaction liquid due to continuous rotation of the rotary shaft 121, it is possible to cause the "siphon-like" movement of the treatment liquid through the suction portion 124, the tubular channel 126, and the ejection portion 125. At this time, even if the rotational speed of the rotary shaft 121 is reduced, this "siphon-like" phenomenon continues due to hysteresis. This allows the treatment liquid 116 to collide with the inner wall 111 of the treatment chamber 110 and to move upward from the bottom 109 of the treatment chamber 110, and it is thus possible to facilitate stirring (e.g., agitation or circulation in the vertical direction) of the treatment liquid 116 in the height direction of the treatment chamber 110 while rotating the rotary shaft 121 at a reduced speed (using less power).

Note that, in the present invention, the above-described treatment chamber 110, rotary shaft 121, attachment tool 122, and liquid flow member 123 are independently made of, for example, a metal such as iron, stainless steel, hastelloy, or titanium, or a material composed of a combination thereof. These members may be provided with a coating known in the art, such as Teflon (registered trademark), glass lining, or rubber lining, in order to enhance chemical resistance.

In FIG. 1, the inner wall 111 of the treatment chamber 110 is located relatively close to the liquid dispersal device 120, but the present invention is not limited to such a form. For example, the treatment chamber may be large for the liquid dispersal device 120, and a distance between the ejection portion 125 of the liquid dispersal device 120 and the inner wall of the treatment chamber may be large. Alternatively, with the liquid dispersal device 120 of the present invention, water or sea water in a lake or the ocean may be used as the treatment liquid instead of the treatment liquid 116 in such a treatment chamber 110. When the liquid dispersal device 120 is used at such a location, the treatment chamber is not essential.

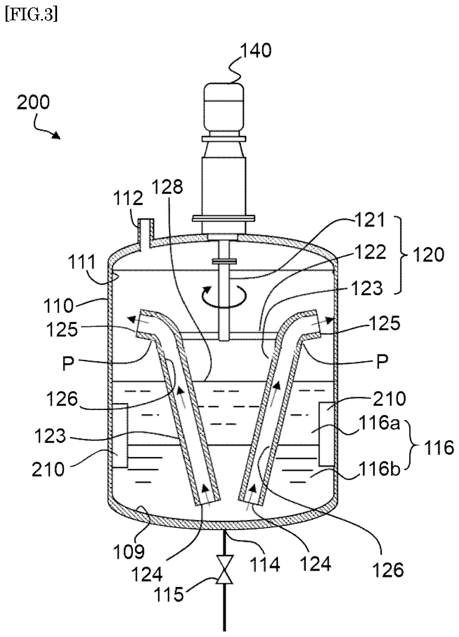

FIG. 3 is a schematic view showing another example of the treatment liquid circulation apparatus in which the liquid dispersal device that can be used in the method of the present invention is incorporated. A treatment liquid circulation apparatus 200 shown in FIG. 3 includes a plurality of obstruction plates 210 that are provided on the inner wall 111 of the treatment chamber 110 and extend from the bottom 109 of the treatment chamber 110 to a position above the liquid surface 128 of the treatment liquid 116. In FIG. 3, each of the obstruction plates 210 is provided so as to be located, for example, at a substantially central position in the treatment liquid 116 in a static state (i.e., in the case of the treatment liquid 116 constituted by a two-phase system reaction liquid composed of the oil phase 116a and the water phase 116b, the upper end of the obstruction plate 210 is located inside the oil phase 116a, the lower end of the obstruction plate 210 is located inside the water phase 116b, and the upper end and the lower end are located near the interface between the oil phase 116a and the water phase 116b).

The obstruction plates 210 have a function of preventing the treatment liquid 116 in the treatment chamber 110 from rotating together with the liquid flow member 123 rotated via the attachment tool 122 due to the rotation of the rotary shaft 121. In other words, the obstruction plates 210 serve as obstacles when the treatment liquid 116 rotates in the horizontal direction inside the treatment chamber 110, and thus formation of a vortex can be prevented. As a result, irregular motion of the treatment liquid 116 is caused in the treatment chamber 110, resulting in not only the above-described "siphon-like" phenomenon occurring through the suction portion 124, the normal channel 126, and the ejection portion 125 of the liquid flow member 123 of the liquid dispersal device 120, but also an improvement in the efficiency of mixing and agitating the treatment liquid 116.

In the treatment liquid circulation apparatus 200 shown in FIG. 3, the number of obstruction plates 210 provided in the treatment chamber 110 is not necessarily limited, but the treatment liquid circulation apparatus 200 includes, for example, one to eight obstruction plates provided at substantially equal intervals on the inner wall 111 of the treatment chamber 110.

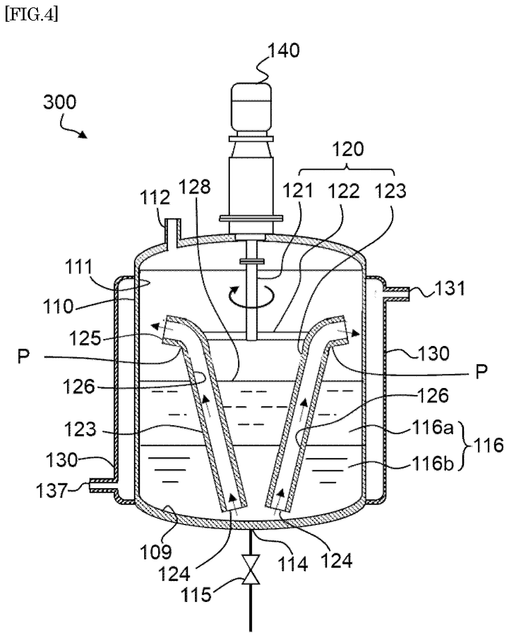

FIG. 4 is a schematic view showing yet another example of the treatment liquid circulation apparatus in which the liquid dispersal device that can be used in the method of the present invention is incorporated. In a treatment liquid circulation apparatus 300 shown in FIG. 4, a jacket 310 for temperature control is provided around the outer circumferential surface of the treatment chamber 110. The jacket 310 shown in FIG. 4 is made of, for example, a hollow material, and a thermal medium such as steam, water, or heat transfer oil can be introduced via a pipe (not shown) from a jacket inlet 320 and discharged from a jacket outlet 330. The thermal medium introduced into the jacket 310 can control the temperature of the treatment liquid 116 in the treatment chamber 110, by heating the treatment liquid 116 from outside of the treatment chamber 110.

In the embodiment shown in FIG. 4, a thermal medium for heating is used as the thermal medium to heat the inside of the treatment chamber 110, but the present invention is not limited to this example. For example, instead of the heating heat medium, a cooling heat medium such as liquefied nitrogen, water, brine, or a gas coolant (e.g., carbon dioxide or chlorofluorocarbon) may also be introduced into the jacket 310.

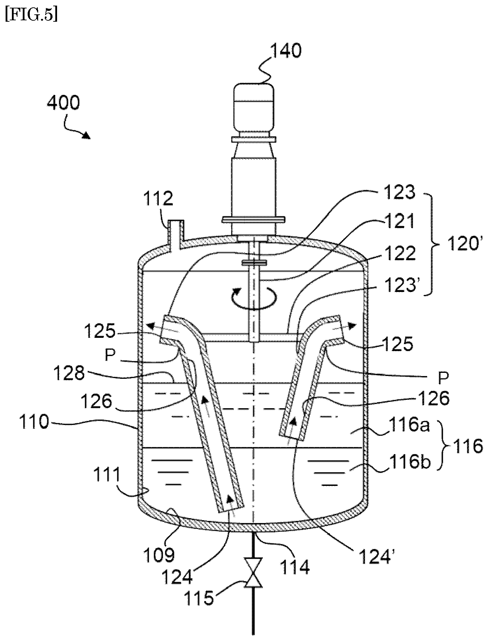

FIG. 5 is a schematic view showing yet another example of the treatment liquid circulation apparatus in which the liquid dispersal device that can be used in the method of the present invention is incorporated. In a treatment liquid circulation apparatus 400 shown in FIG. 5, two types of liquid flow members 123 and 123' that differ in length are used, and a liquid dispersal device 120' includes the liquid flow members 123 and 123', the rotary shaft 121, and the attachment tool 122.

In the reaction apparatus 400 shown in FIG. 5, the suction portions 124 and 124' of the liquid flow members 123 and 123' of the liquid dispersal device 120' are located at different heights. That is to say, the suction portion 124' of the liquid flow member 123' is located above the suction portion 124 of the liquid flow member 123. For example, as shown in FIG. 5, in the static state (i.e., the state in which the rotary shaft 121 is not rotated), the suction portion 124 of the liquid flow member 123 may be located in the water phase 116b of the treatment liquid 116, and the suction portion 124' of the liquid flow member 123' may be located in the oil phase 116a of the treatment liquid 116. Due to the suction portions 124 and 124' of the liquid flow members 123 and 123' being located as described above, when the rotary shaft 121 is rotated, the components in the treatment liquid 116 drawn through the suction portion 124 and the components in the treatment liquid 116 drawn through the other suction portion 124' can be made different. That is to say, it is possible to, for example, draw the components (water phase components) contained in the water phase 116b of the treatment liquid 116 in a relatively larger amount through the suction portion 124 of the liquid flow member 123. On the other hand, it is possible to, for example, draw the components (oil phase components) contained in the oil phase 116a of the treatment liquid 116 in a relatively larger amount through the suction portion 124' of the liquid flow member 123'.

The circulation method of the present invention is useful in the production of various reaction products in which agitation of a reaction liquid (reactants) is desired. In particular, when a two-phase system (heterogeneous reaction system) reaction liquid such as those constituted by an oil phase and a water phase is used as the treatment liquid, it is possible to obtain a reaction product more effectively with use of the method of the present invention, when compared with a case where a conventional agitator is used. Examples of such a two-phase system include transesterification reactions to produce fatty acid esters.

Note that, if more vigorous agitation of the treatment liquid in the treatment chamber is required in the circulation method of the present invention, a conventional agitation blade may also be provided inside the treatment chamber.

Next, the following describes a method for producing a predetermined reaction product (which may be referred to simply as a "production method" hereinafter) with use of the circulation method of the present invention.

In the production method of the present invention, agitation is performed through circulation of a reaction liquid serving as a treatment liquid in the treatment liquid circulation apparatus in which the above-described liquid dispersal device is incorporated. Here, the term "agitation through circulation" as used herein refers to both agitation performed by applying horizontal rotation to a target treatment liquid (e.g., a reaction liquid) and stirring (or mixing) of the entire treatment liquid through vertical movement and circulation of the treatment liquid, as in the case of using the above-described treatment liquid circulation apparatus.

The reaction liquid (treatment liquid) for use in the present invention contains an inorganic or organic liquid medium, and its chemical reaction can be commonly progressed and controlled through agitation with use of an agitator or the like. For example, the treatment liquid is a heterogeneous reaction liquid. For example, a reaction liquid constituted by an oil phase and a water phase is useful in that the emulsification of the reaction liquid can be improved and facilitated by the above-mentioned agitation through circulation.

In the case where the treatment liquid is a heterogeneous reaction liquid, the treatment liquid contains, for example, a raw material oil or fat, a liquid enzyme, an alcohol having 1 to 8 carbon atoms, and water.

The raw material oil or fat is, for example, an oil or fat that can be used to produce a fatty acid ester for biodiesel fuel. The raw material oil or fat may be a preliminarily refined oil or fat or may be an unrefined oil or fat containing impurities. Examples of the raw material oil or fat include cooking oils and fats, waste cooking oils and fats, crude oils, and other waste matter-based oils and fats, as well as combinations thereof. Examples of the cooking oils and fats and waste cooking oils and fats include vegetable oils and fats, animal oils and fats, fish oils, oils and fats produced by microorganisms, and waste oils thereof, as well as mixtures (mixed oils and fats) thereof. Examples of the vegetable oils and fats include soybean oil, rapeseed oil, palm oil, and olive oil, but are not necessarily limited thereto. Examples of the animal oils and fats include beef tallow, lard, chicken fat, whale oil, and mutton tallow, but are not necessarily limited thereto. Examples of the fish oils include sardine oil, tuna oil, and squid oil, but are not necessarily limited thereto. Examples of the oils and fats produced by microorganisms include oils and fats produced by microorganisms belonging to the genus *Mortierella*, the genus *Schizochytrium*, or the like, but are not necessarily limited thereto.

Examples of the crude oils include unrefined or unprocessed oils and fats that are obtained from a conventional oil expression step for cooking oils and fats, and the crude oils may contain, for example, gum-like impurities, such as phospholipids and/or proteins, free fatty acids, pigments, trace metals, and other hydrocarbon impurities that are soluble in oil, as well as combinations thereof. The amount of impurities contained in a crude oil is not particularly limited.

Examples of the waste matter-based oils and fats include oil foots obtained as a result of refining, in the presence of an alkali, raw oil that is produced during the production of a food oil or fat, heat-treated oil, press oil, and rolling oil, as well as combinations thereof.

The raw material oil or fat may contain water in any amount, as long as the water does not inhibit the inherent characteristics of the oil or fat. Furthermore, an unreacted oil or fat remaining in a solution that has been used in a separate reaction for forming a fatty acid ester may also be used as the raw material oil or fat.

With regard to the liquid enzyme, enzyme catalysts that have the properties of liquid at room temperature, of any enzyme catalysts that can be used for a fatty acid ester generating reaction can be used. Examples of the liquid enzyme include lipase, cutinase, and combinations thereof. Here, the term "lipase" as used herein refers to an enzyme that has the ability to act on a glyceride (also called acylglycerol) and degrade the glyceride into glycerin or a partial glyceride and a fatty acid, and also has the ability to generate a fatty acid ester via transesterification in the presence of a linear lower alcohol.

The lipase may be 1,3- specific or may be nonspecific. In terms of the capability of producing a linear lower alcohol ester of a fatty acid, it is preferable that the lipase is nonspecific. Examples of the lipase include lipases derived from filamentous fungi belonging to the genus *Rhizomucor*(*Rhizomucor miehei*), the genus *Mucor,* the genus *Aspergillus*, the genus *Rhizopus*, the genus *Perzicillium*, and the like; lipases derived from yeasts belonging to the genus *Candida* (*Candida antarcitica*, *Candida rugosa,* and *Candida cylindracea*), *Pichia*, and the like; lipases derived from bacteria belonging to the genus *Pseudomonas,* the genus *Serratia,* and the like; and lipases derived from animals, such as pig pancreas. Liquid lipase can be obtained by, for example, concentrating and refining a culture solution of any of the above-described microorganisms containing lipase produced by that microorganism or by dissolving powdered lipase in water. A commercially available liquid lipase can also be used.

The amount of the above-described liquid enzyme used in the present invention varies according to, for example, the type and/or amount of raw material fat or oil, and is therefore not necessarily limited, but is preferably 0.1 to 50 parts by mass, and more preferably 0.2 to 30 parts by mass, with respect to 100 parts by mass of raw material fat or oil that is used. If the amount of liquid enzyme that is used is less than 0.1 parts by mass, an effective transesterification reaction cannot be catalyzed, and there is thus a risk that the yield and/or the percentage yield of a desired fatty acid ester may be reduced. If the amount of liquid enzyme that is used exceeds 50 parts by mass, the yield and/or the percentage yield of the desired fatty acid ester that is obtained through the transesterification reaction no longer changes, but rather there is a risk that the production efficiency may be reduced.

The alcohol is a linear or branched lower alcohol (e.g., an alcohol having 1 to 8 carbon atoms, and preferably an alcohol having 1 to 4 carbon atoms). A linear lower alcohol is preferable. Examples of the linear lower alcohol include, but are not necessarily limited to, methanol, ethanol, n-propanol, and n-butanol, as well as combinations thereof.

The amount of the above-described alcohol that is used varies according to, for example, the type and/or amount of raw material oil or fat that is used and is therefore not necessarily limited, but is preferably 5 to 100 parts by mass, and preferably 10 to 30 parts by mass, with respect to 100 parts by mass of raw material oil or fat. If the amount of alcohol that is used is less than 5 parts by mass, an effective transesterification reaction cannot be performed, and there is thus a risk that the yield and/or the percentage yield of a desired fatty acid ester may be reduced. If the amount of alcohol that is used exceeds 100 parts by mass, the yield and/or the percentage yield of the desired fatty acid ester that is obtained through the transesterification reaction no longer changes, but rather there is a risk that the production efficiency may be reduced.

Water may be any of distilled water, ion-exchanged water, tap water, and pure water. The amount of the above-described water that is used varies according to, for example, the type and/or amount of raw material oil or fat that is used and is therefore not necessarily limited, but may be preferably 0.1 to 50 parts by mass, and preferably 2 to 30 parts by mass, with respect to 100 parts by mass of raw material oil or fat. If the amount of water that is used is less than 0.1 parts by mass, the amount of the water layer formed in the reaction system is insufficient, making it impossible for an effective transesterification reaction using the above-described raw material oil or fat, liquid enzyme, and alcohol to occur, and thus there is a risk that the yield and/or the percentage yield of a desired fatty acid ester may be reduced. If the amount of water that is used exceeds 50 parts by mass, the yield and/or the percentage yield of the desired fatty acid ester that is obtained through the transesterification reaction no longer changes, but rather there is a risk that the production efficiency may be reduced.

In the production method of the present invention, a predetermined electrolyte may be added to the above-described treatment liquid (reaction liquid). Examples of anions included in the electrolyte include hydrogen carbonate ions, carbonate ions, chloride ions, hydroxide ions, citrate ions, hydrogen phosphate ions, dihydrogen phosphate ions, and phosphate ions, as well as combinations thereof, but are not necessarily limited thereto. Examples of cations included in the electrolyte include alkali metal ions and alkaline earth metal ions, as well as combinations thereof, and more specifically include sodium ions, potassium ions, and calcium ions, as well as combinations thereof. In the present invention, preferred examples of the electrolyte include sodium hydrogen carbonate (baking soda), sodium carbonate, calcium chloride, calcium hydroxide, trisodium citrate, sodium hydrogen phosphate, sodium dihydrogen phosphate, sodium chloride, and trisodium phosphate, as well as combinations thereof. Sodium hydrogen carbonate (baking soda) is more preferable because it is versatile and easily available, for example.

The above-described raw material fat or oil, catalyst, alcohol, and water are placed into, for example, the treatment chamber 110 of the treatment liquid circulation apparatus 100 shown in FIG. 1 through the treatment liquid inlet 112 simultaneously or in any order to form a treatment liquid 116 constituted by the oil phase 116a and the water phase 116b. Subsequently, when the liquid flow member 123 of the liquid dispersal device 120 is rotated inside the treatment chamber 110 by the rotation of the rotary shaft 121, the treatment liquid 116 is drawn through the suction portion 124 of the liquid flow member 123, and the drawn treatment liquid moves upward through the tubular channel 126 and is then ejected from the ejection port 125 of the liquid flow members 123 toward the inner wall 111 of the treatment chamber 110 due to the above-described "siphon-like" phenomenon occurring through the suction portion 124, the normal channel 126, and the ejection portion 125 of the liquid flow member 123 of the liquid dispersal device 120, as described above. This movement of the treatment liquid 116 facilitates agitation of the treatment liquid 116 and the formation of a fatty acid ester that is a reaction product. The temperature in the treatment chamber 110 is not necessarily limited, but is, for example, 5°C to 80°C, preferably 15°C to 80°C, and more preferably 25°C to 50°C.

Note that, in the present invention, the rotary shaft does not necessarily need to be rotated at a high speed (e.g., 600 rpm or higher) in the treatment liquid circulation apparatus 100. For example, the rotary shaft may be rotated at a low speed (e.g., 80 rpm or higher and lower than 300 rpm) or at a medium speed (e.g., 300 rpm or higher and lower than 600 rpm). Furthermore, the reaction time varies according to the amounts of a raw material oil or fat, a catalyst, an alcohol, and water that are used and is therefore not necessarily limited, and a person skilled in the art can set any desired period of time.

After the completion of the reaction, the product and reaction residues are taken out of the treatment chamber 110 of the treatment liquid circulation apparatus 100, and separated into a layer containing the fatty acid ester and a layer containing the by-product glycerin by using, for example, a method that is well known to a person skilled in the art. After that, the layer containing the fatty acid ester may be further subjected to isolation and refining of the fatty acid ester by using a method that is well known to a person skilled in the art, as necessary.

The fatty acid ester that is obtained in the above-described manner can be used as, for example, biodiesel fuel or a constituent component thereof.

### List of Reference Numerals

- 100, 200, 300, 400: Treatment liquid circulation apparatus
- 109: Bottom
- 110: Treatment chamber
- 111: Inner wall
- 112: Treatment liquid inlet
- 114: Product outlet
- 115: Valve
- 116: Treatment liquid
- 116a: Oil phase
- 116b: Water phase
- 120: Liquid dispersal device
- 121: Rotary shaft
- 122: Attachment tool
- 123, 123': Liquid flow member
- 124, 124': Suction portion
- 125: Ejection portion
- 126: Tubular channel
- 128: Liquid surface
- 140: Motor
- 210: Obstruction plate
- 310: Jacket
- 320: Jacket inlet
- 330: Jacket outlet

## Claims

1. A method for circulating a treatment liquid, comprising:
rotating a liquid dispersal device to draw the treatment liquid into the liquid dispersal device and eject the treatment liquid from the liquid dispersal device,
wherein the liquid dispersal device includes:
a rotary shaft disposed in a vertical direction; and
at least one liquid flow member attached to the rotary shaft,
the liquid flow member including: an ejection portion that is located at a higher position and protrudes outside the treatment liquid; a suction portion that is located at a lower position and is immersed in the treatment liquid; and a tubular channel that extends between the ejection portion and the suction portion,
the tubular channel being bent and the ejection portion being oriented toward a side opposite to the rotary shaft, and
an angle θ₂ between a direction in which the ejection portion is oriented and a horizontal direction being -90° to 20° with respect to the horizontal direction, and
the tubular channel is filled with the treatment liquid.

2. The method according to claim 1, wherein the liquid dispersal member is inclined, and the suction portion is closer to an axis of the rotary shaft than the ejection portion is.

3. The method according to claim 1 or 2, wherein the liquid dispersal device includes at least two liquid flow members.

4. The method according to any one of claims 1 to 3, wherein the angle θ₂ is 0° to 20° with respect to the horizontal direction.

5. The method according to any one of claims 1 to 4, wherein a state in which the tubular channel of the liquid flow member of the liquid dispersal device is filled with the treatment liquid is kept due to rotation of the rotary shaft of the liquid dispersal device.

6. The method according to any one of claims 1 to 5, wherein the treatment liquid is a reaction liquid constituted by an oil phase and a water phase.

7. The method according to any one of claims 1 to 6, wherein a state in which the tubular channel is filled with the treatment liquid is kept due to hysteresis of the treatment liquid obtained by a decrease in rotation of the rotary shaft of the liquid dispersal device.

8. Aliquid dispersal device comprising:
a rotary shaft disposed in a vertical direction; and
a liquid flow member attached to the rotary shaft,
wherein the liquid flow member includes:
at least one first liquid flow member; and
at least one second liquid flow member,
the first liquid flow member and the second liquid flow member independently include an ejection portion located at a higher position, a suction portion located at a lower position, and a tubular channel extending between the ejection portion and the suction portion,
the tubular channel being bent and the ejection portion being oriented toward a side opposite to the rotary shaft, and
an angle θ₂ between a direction in which the ejection portion is oriented and a horizontal direction being 0° to 20° with respect to the horizontal direction, and
the suction portion of the first liquid flow member is located above the suction portion of the second flow member.

9. The liquid dispersal device according to claim 8, wherein the tubular channel has a circular cross section, an elliptical cross section, or a polygonal cross section.

10. A treatment liquid circulation apparatus comprising:
a treatment chamber for containing a treatment liquid; and
the liquid dispersal device according to claim 8 or 9 provided in the treatment chamber.

11. The treatment liquid circulation apparatus according to claim 10, wherein the treatment liquid is a reaction liquid constituted by an oil phase and a water phase.
